# EUROPÄISCHE PATENTSCHRIFT

(11) **EP 0 663 803 B1**
(45) Veröffentlichungstag und Bekanntmachung des Hinweises auf die Patenterteilung: **23.04.1997**
(21) Anmeldenummer: 94926185.3
(22) Anmeldetag: 11.08.1994
(51) Int. Cl.: A47J 31/44

(54) **KAFFEEMASCHINE**
COFFEE MACHINE
CAFETIERE AUTOMATIQUE

(30) Priorität: 12.08.1993 DE 9312009 U
(43) Veröffentlichungstag der Anmeldung: 26.07.1995
(73) Patentinhaber: Robert Krups GmbH & Co. KG, 42719 Solingen (DE)
(72) Erfinder: BAUMANN, Heinrich, D-42659 Solingen (DE)
(74) Vertreter: Buse, Karl Georg, Dipl.-Phys.
(86) Internationale Anmeldenummer: EP9402685
(87) Internationale Veröffentlichungsnummer: WO9505109

(56) Entgegenhaltungen:
- DE-U- 8 912 802
- FR-A- 2 311 672
- FR-A- 2 628 956
- US-A- 3 384 004

## Beschreibung

Die Neuerung betrifft eine Kaffeemaschine mit einem in einem Gehäuse befindlichen Wasserbehälter und einer elektrische Regeleinrichtungen umfassenden Heizeinrichtung, sowie einem auf einen Gehäusefuß aufstellbaren Getränkesammelbehälter und einem darüber angeordneten Kaffeebrühgehäuse, das aus dem Gehäuse ausschwenkbar und in Gebrauchslage am Gehäuse mittels eines manuell betätigbaren, in Sperrichtung federbelasteten Rückhalters gesichert ist.

Aus der US 3 384 004 ist eine Kaffeemaschine der vorgenannten Art bekannt. Diese Kaffeemaschine weist ein im wesentlichen C-förmiges Gehäuse auf, wobei in den Freiraum des C-förmigen Gehäusequerschnitts ein Getränkesammelbehälter auf einen Gehäusefuß aufstellbar ist. Über dem Getränkesammelbehälter befindet sich ein Kaffeebrühgehäuse, welchem Heißwasser über eine Leitung zugeführt wird und in welchem ein Kaffeemehl enthaltender Filterbeutel eingelegt ist. Zur Entnahme des ausgelaugten Filterbeutels und zum Einlegen eines neuen Kaffeemehl enthaltenden Filterbeutels ist das Kaffeebrühgehäuse aus dem Gehäuse der Kaffeemaschine ausschwenkbar. Zu diesem Zweck ist am Gehäuse der Kaffeemaschine ein Rückhalter angeordnet, der aus einem blattfederartigen Schnäpper und einer mit diesem verbundenen Handhabe besteht, wobei der Schnäpper in Gebrauchslage das Kaffeebrühgehäuse randseitig hinterfaßt und in seiner Gebrauchslage haltert. Bei Betätigung des Rückhalters schwenkt infolge Eigengewichtes bzw. durch Beaufschlagung einer Feder das Kaffeebrühgehäuse aus dem Gehäuse der Kaffeemaschine aus, so daß für die Bedienungsperson das innere des Kaffeebrühgehäuses zugänglich ist. Bei dieser vorbekannten Losung ist das Kaffeebrühgehäuse nach unten ausschwenkbar am Gehäuse der Kaffeemaschine gehaltert und über eine Ringdichtung gegen eine gehäusefeste Abdeckplatte andrückbar, wobei diese Gebrauchslage durch den Rückhalter gesichert ist. Infolge des Brühvorganges kann im Innenraum des Kaffeebrühgehäuses ein leichter Unterdruck bestehen, der ausreichen mag um zu verhindern, daß das Kaffeebrühgehäuse aufgrund seines Schwergewichtes aus dem Gehäuse der Kaffeemaschine nach unten ausschwenken kann. Um jedoch die Ausschwenkbewegung nach Lösung des Rückhalters sicherzustellen kann über eine auf dem Filterbeutel aufliegende, im Ausschwenksinne federbetätigbare Druckplatte das Kaffeebrühgehäuse aus dem Gehäuse der Kaffeemaschine ausgeschwenkt werden, wenn über die Handhabe der Rückhalter gelöst ist.

Aus DE-U-8 912 802 ist eine weitere Kaffeemaschine dieser Art bekannt.

Die Aufgabe der Neuerung besteht darin eine sichere Auslösung der Schwenkbewegung des Kaffeebrühgehäuses nach dessen Entriegelung vom Gehäuse der Kaffeemaschine zu ermöglichen, ohne daß dazu eine undefinierte Schwenkbewegung verursachende Federglieder benutzt werden. Diese Aufgabe ist gemäß der Neuerung dadurch gelöst, daß der Rückhalter mit einem das Kaffeebrühgehäuse im Ausschwenksinne beaufschlagenden und am Gehäuse geführten Schubstab gekuppelt ist. Wenn nun der Rückhalter zur Entsperrung des Kaffeebrühgehäuses betätigt wird, so erfolgt gleichzeitig synchron zur Handhabungsbewegung auch eine davon zwangsläufig abhängige Ausschwenkbewegung des Kaffeebrühgehäuses gegenüber dem Gehäuse der Kaffeemaschine. Dabei genügt es, wenn die bei der neuerungsgemäßen Kaffeemaschine in horizontaler Richtung erfolgende Ausschwenkbewegung nur in einem solchen Ausschwenkwinkel erfolgt, daß die Bedienungsperson die in Gebrauchslage mit der Wandung des Gehäuses der Kaffeemaschine bündige Wandung des Kaffeebrühgehäuses hinterfassen kann, um das Kaffeebrühgehäuse in eine solche Ausschwenklage zu überführen, die ein Auswechseln des Kaffeefilters ohne Umstände erlaubt.

Zur Erzielung eines wenig Bauraum beanspruchenden Ausdrückmechanismusses ist nach einem Ausgestaltungsmerkmal der Neuerung der Rückhalter als an einem Zapfen des Gehäuses gelagerter Winkelhebel ausgebildet, dessen Betätigungsarm mit einem das Kaffeebrühgehäuse zur Sicherung randseitig übergreifenden Rastkopf aus dem Gehäuse vorragt und dessen anderer Hebelarm als den Schubstab aufweisender Kniehebel ausgebildet ist. Dabei ist der als Schubstab ausgebildete eine Arm des Kniehebels mit dem anderen, am Lagerauge des Winkelhebels angeschlossen Arm vorteilhaft durch ein Filmscharnier verbunden.

Damit der Rückhalter - nachdem er von der Bedienungsperson losgelassen wird - selbsttätig einerseits in seine Sperrlage und andererseits dessen Schubstab in seine wirkungslose Lage zurückgeführt wird, ist der den Winkelhebel lagernde, gehäusefeste Zapfen von einer Bügelfeder umgriffen, deren einer Bügel an einem gehäusefesten Widerlager abgestützt ist, und deren anderer Bügel den mit dem Rastkopf versehenen Betätigungsarm im Sperrsinne beaufschlagt. Dabei weist der Betätigungsarm des Winkelhebels Sicherungsvorsprünge auf, mit denen die Bügel der Bügelfeder lagesicher übergriffen sind. Dadurch wird die Funktionslage der Bügelfeder gesichert.

Die Neuerung ist in einem Ausführungsbeispiel auf der Zeichnung dargestellt und wird nachfolgend näher erläutert. Es zeigen:

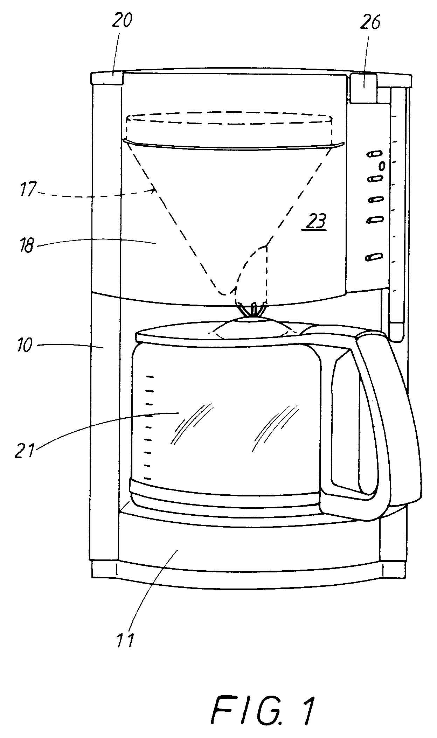

- Fig. 1: die mit der Neuerung ausgestattete Kaffeemaschine in einer perspektivischen Darstellung im Blick auf ihre Frontseite,
- Fig. 2: die aus Fig. 1 ersichtliche Kaffeemaschine in einer Draufsicht bei abgenommenem Gehäusedeckel und am Gehäuse festgelegtem Kaffeebrühgehäuse,
- Fig. 3: eine weitere Draufsicht auf die Kaffeemaschine bei abgenommenem Gehäusedeckel, wobei sich der Rückhalter in der betätigten Stellung befindet und über den Schubstab das Kaffeebrühgehäuse in eine gegenüber der Kaffeemaschine bereichsweise horizontal ausgeschwenkte Lage überführt ist.

Die Kaffeemaschine weist ein im Querschnitt ringsegmentartiges Gehäuse 10 auf, das in seinem unteren Bereich einen eine Warmhalteplatte aufweisenden kreisförmigen Gehäusefuß 11 an etwa seinem halben Umfang umfaßt. Das ringsegmentartige Gehäuse 10 ist in seinem oberen Bereich als Wasserbehälter 12 ausgebildet, der an seinem Boden eine Einlauföffnung 13 aufweist, die zu einer im Gehäusefuß 11 untergebrachten, nicht dargestellten und an sich bekannten Heizeinrichtung führt, aus welcher über eine Steigleitung 14 das erhitzte Wasser in eine oberseitig angeordnete Auslaufkammer 15 überführt wird, durch deren Auslaßöffnung 16 das erhitzte Wasser schließlich in ein Kaffeebrühgehäuse 18 gelangt, in welchem ein Filtertrichter 17 herausnehmbar eingesetzt ist. Dieses Kaffeebrühgehäuse 18 ist auf einer Seite über ein Drehgelenk 19 mit dem oberen Bereich des Gehäuses 10 in horizontaler Richtung ausschwenkbar verbunden. Das ringsegmentartige Gehäuse 10 ist oberseitig durch einen im wesentlichen kreisförmigen Gehäusedeckel 20 abgedeckt, dessen eine Hälfte mit der Oberseite des Gehäuses 10 die Auslaufkammer 15 abdeckend fest verbunden ist, während die andere Hälfte des Gehäusedeckels 20 zur Freigabe des Wasserbehälters 12 offenklappbar ist. Der zwischen dem Kaffebrühgehäuse und dem Gehäusefuß 11 befindliche Freiraum dient der Aufnahme eines auf die Warmhalteplatte im Gehäusefuß 11 aufstellbaren Getränkesammelbehälters 21.

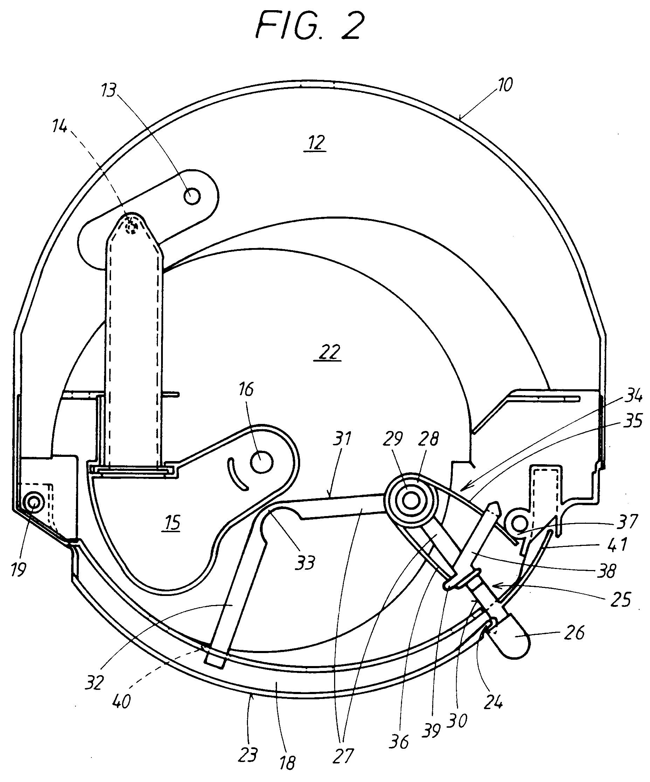

Der über das Kaffeebrühgehäuse 18 vorgezogene, scheibenartige Gehäuseteil 22 bildet zusammen mit dem diesen übergreifenden Gehäusedeckel 20 eine flache und bereichsweise zylinderscheibenartige Kammer, in welcher sich auch die Auslaufkammer 15 befindet. Die Vorderwand 23 des Kaffeebrühgehäuses 18 ist bis zur Oberseite des Gehäusedeckels 20 hochgezogen und weist im Bereich der die Auslaufkammer 15 aufweisenden zylinderscheibenartigen Kammer einen Vorsprung 24 auf. Dieser Vorsprung 24 ist von einem den Gehäuseteil 22 und die Vorderwand 23 des Kaffeebrühgehäuses 18 in dessen Gebrauchsstellung überragenden, als Handhabe dienenden Rastkopf 26 des Rückhalters 25 übergriffen. Dieser Rückhalter 25 ist als Winkelhebel 27 ausgebildet, dessen Lagerauge 28 einen gehäusefesten Achszapfen 29 umgreift. Vom Gelenkauge 28 ragt einerseits der Betätigungsarm 30 ab, während der andere vom Lagerauge 28 abragende Hebelarm 31 als Kniehebel ausgebildet ist, dessen an das Lagerauge 28 ageschlossener Arm über ein Filmscharnier 33 mit einem als Schubstab 32 ausgebildeten andere Arm verbunden ist. Dieser Schubstab 32 durchgreift eine Führungsöffnung 40 in der aufragenden Wandung des Gehäuseteiles 22 und kann bei Betätigung des Rückhalters 25 die Innenseite der Vorderwand 23 des Kaffeebrühgehäuses 18 beaufschlagen. Um den Rückhalter 25 nach jeder Betätigung in die aus Fig. 2 ersichtliche Stellung selbsttätig rückführen zu können, ist der gehäusefeste Zapfen 29 von einer Bügelfeder 34 umgriffen, deren einer Bügel 35 an einem gehäusefesten Widerlager 37 abgestützt ist, während der andere Bügel 36 den Betätigungsarm 30 im Sinne einer Sperrung des Kaffeebrühgehäuses 18 durch den Rastkopf 26 beaufschlagt. Der Betätigungsarm 30 weist Sicherungsvorsprünge 38 und 39 auf, die verhindern, daß die Bügel 35 und 36 bzw. die Bügelfeder 34 ihre vorgesehene Lage verläßt. Außerdem ist am Betätigungsarm 30 des Rückhalters 25 eine Abdeckzunge 41 angeordnet, die den Durchlaß für den Betätigungsarm im Gehäuseteil 22 abdeckt, wenn sich der Rückhalter 25 in einer die Gebrauchsstellung des Kaffeebrühgehäuses 18 aufrechterhaltenden Sperrlage befindet.

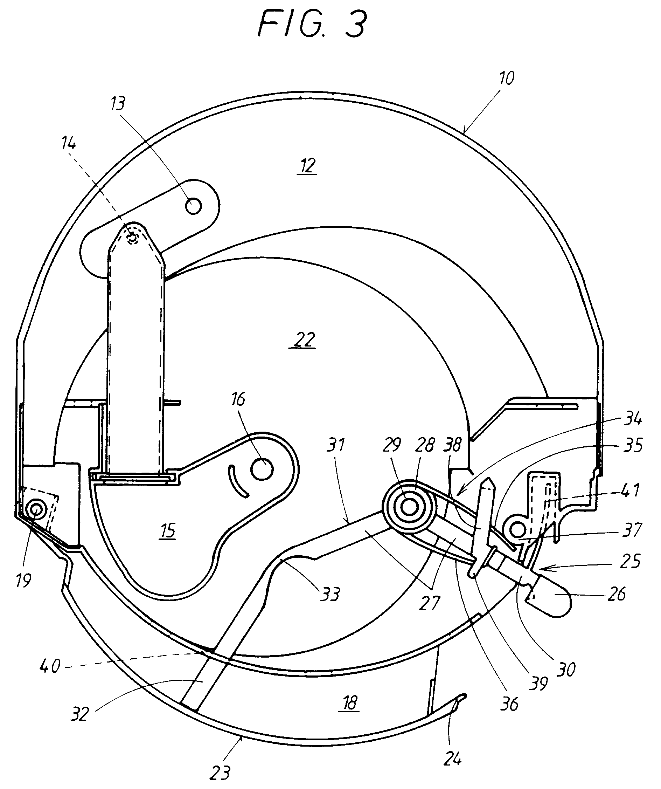

Ausgehend von der in Fig. 2 dargestellten Gebrauchslage des Kaffeebrühgehäuses 18 läßt sich der Filtertrichter 17 im Kaffeebrühgehäuse entleeren bzw. neu beschicken, indem der Rastkopf 26 entgegen dem Uhrzeigersinn betätigt wird. Dabei gibt zum einen der Rastkopf 26 den Vorsprung 24 an der Vorderwand 23 des Kaffeebrühgehäuses 18 frei, während zum anderen bei weiterer Verschwenkung des Rückhalters 25 über den Rastkopf 26 der die Führungsöffnung 40 durchdringende Schubstab 32 die Innenseite der Vorderwand 23 des Kaffeebrühgehäuses 18 beaufschlagt und das Kaffeebrühgehäuse in die aus Fig. 3 ersichtliche Stellung überführt. Die Bedienungsperson mag nun den Rastkopf 26 loslassen, der daraufhin infolge der Wirkung der Bügelfeder 34 in die aus Fig. 2 ersichtliche Lage zurückschwenkt, während das Kaffeebrühgehäuse 18 in der aus Fig. 3 ersichtlichen Lage verbleibt. Daher kann nun die Bedienungsperson den Vorsprung 24 bzw. die Vorderwand 23 des Kaffeebrühgehäuses 18 hintergreifen und über die aus Fig. 3 ersichtliche Aufklapplage hinaus ausschwenken, so daß sich der Filtertrichter 17 entnehmen läßt, um beispielsweise das ausgelaugte Kaffeemehl zu entfernen und unter Verwendung einer frischen Filtertüte neues Kaffeemehl einzusetzen. Dann kann durch einfaches Zurückschwenken des Kaffeebrühgehäuses 18 die aus Fig. 2 ersichtliche Rastlage erneut erreicht werden.

Wie bereits erwähnt, gibt die dargestellte und vorbeschriebene Ausführungsform den Gegenstand der Neuerung nur beispielsweise wieder, der keinesfall allein darauf beschränkt ist. Es sind vielmehr noch mancherlei Änderungen und andere Ausgestaltungen des Gegenstandes der Neuerung denkbar.

## Patentansprüche

1. Kaffeemaschine mit einem in einem Gehäuse (10) befindlichen Wasserbehälter (12) und einer elektrische Regeleinrichtungen umfassenden Heizeinrichtung sowie einem auf einen Gehäusefuß (11) aufstellbaren Getränkesammelbehälter (21) und einem darüber angeordneten Kaffeebrühgehäuse (18), das aus dem Gehäuse (10) ausschwenkbar und in Gebrauchslage am Gehäuse (10) mittels eines manuell betätigbaren, in Sperrrichtung federbelasteten Rückhalters (25) gesichert ist,
**dadurch gekennzeichnet,**
daß der Rückhalter (25) mit einem das Kaffeebrühgehäuse (18) im Ausschwenksinne beaufschlagenden und am Gehäuse (10) geführten Schubstab (32) gekuppelt ist.

2. Kaffeemaschine nach Anspruch 1, dadurch gekennzeichnet, daß der Rückhalter (25) als an einem Zapfen (29) des Gehäuses (10) gelagerter Winkelhebel (27) ausgebildet ist, dessen Betätigungsarm (30) mit einem das Kaffeebrühgehäuse (18) randseitig übergreifenden Rastkopf (26) aus dem Gehäuse (10) vorragt, und dessen anderer Hebelarm (31) als den Schubstab (32) aufweisender Kniehebel ausgebildet ist.

3. Kaffeemaschine nach Anspruch 1 oder 2, dadurch gekennzeichnet, daß der als Schubstab (32) ausgebildete eine Arm des Kniehebels mit dem anderen, am Lagerauge (28) des Winkelhebels (27) angeschlossenen Arm durch ein Filmscharnier (33) verbunden ist.

4. Kaffeemaschine nach einem oder mehreren der vorhergehenden Ansprüche, dadurch gekennzeichnet, daß der gehäusefeste Zapfen (29) von einer Bügelfeder (34) umgriffen ist, deren einer Bügel (35) an einem gehäusefesten Widerlager (37) abgestützt ist, und deren anderer Bügel (36) dem mit dem Rastkopf (26) versehenen Betätigungsarm (30) im Sperrsinne beaufschlagt.

5. Kaffeemaschine nach Anspruch 4, dadurch gekennzeichnet, daß der Betätigungsarm (30) des Winkelhebels (27) Sicherungsvorsprünge (38, 39) aufweist, mit denen die Bügel (35, 36) der Bügelfeder (34) lagesichernd übergriffen sind.

## Claims

1. A coffee machine having a water container (12) disposed in a housing (10), a heating means including electrical regulating devices, a beverage collecting container (21) which can be placed on a housing base (11), and a coffee brewing housing (18) which is arranged thereabove and which is pivotable out of the housing (10) and which is secured in the position of use on the housing (10) by means of a manually actuable retainer (25) which is spring-loaded in the locking direction, characterised in that the retainer (25) is coupled to a thrust bar (32) which is guided on the housing (10) and which acts on the coffee brewing housing (18) in the outwardly pivoting direction.

2. A coffee machine according to claim 1 characterised in that the retainer (25) is in the form of an angle lever (27) which is mounted on a projection (29) of the housing (10) and whose actuating arm (30) projects out of the housing (10) with a retaining head (26) which engages over the coffee brewing housing (18) at the edge, the other lever arm (31) of the angle lever (27) being in the form of an elbow lever having the thrust bar (32).

3. A coffee machine according to claim 1 or claim 2 characterised in that the one arm of the elbow lever, which arm is in the form of the thrust bar (32), is connected by a film hinge (33) to the other arm which is connected to the mounting eye (28) of the angle lever (27).

4. A coffee machine according to one or more of the preceding claims characterised in that the projection (29) which is fixed with respect to the housing is embraced by a leg spring (34) of which one leg (35) is supported against a support means (37) which is fixed with respect to the housing, and the other leg (36) urges the actuating arm (30) provided with the retaining head (26) in the locking direction.

5. A coffee machine according to claim 4 characterised in that the actuating arm (30) of the angle lever (27) has securing projections (38, 39) which engage over the legs (35, 36) of the spring (34) to secure them in position.

## Revendications

1. Machine à café munie d'un réservoir d'eau (12) se trouvant dans un boîtier (10) et d'un organe électrique de chauffage entourant des organes de réglage, ainsi que d'un récipient collecteur de boisson (21) susceptible d'être placé sur un pied de boîtier (11) et d'un boîtier (18) pour le café en poudre à infuser, disposé au dessus et qui est susceptible d'être extrait du boîtier (10) par pivotement et qui en position d'utilisation, est fixé au boîtier (10) à l'aide d'un encliquetage d'arrêt (25) susceptible d'être actionné manuellement et sollicité élastiquement dans le sens du blocage, caractérisée en ce que l'encliquetage d'arrêt (25) est accouplé à une tige de poussée (32) guidée sur le boîtier (10) et actionnant le boîtier (18) pour le café en poudre à infuser, dans la direction de l'extraction par pivotement.

2. Machine à café selon la revendication 1, caractérisée en ce que l'encliquetage d'arrêt (25) est réalisé sous la forme d'un levier coudé (27) monté à rotation sur une broche (29) du boîtier (10), et dont un bras d'actionnement (30) fait saillie hors du boîtier (10) par une tête de verrouillage (26) recouvrant du côté du bord le boîtier (18) pour le café en poudre à infuser, tandis que son autre bras de levier (31) est réalisé sous la forme de levier à genouillère comportant la tige de poussée (32).

3. Machine à café selon la revendication 1 ou 2, caractérisée en ce que l'un des bras du levier à genouillère, réalisé sous la forme de tige de poussée (32), est relié à l'autre bras, attaché à l'oeillet de palier (28) du levier coudé (27) par une charnière en film (33).

4. Machine à café selon l'une ou plusieurs des revendications précédentes, caractérisée en ce que la broche (29), solidaire du boîtier, est entourée d'un ressort en étrier (34), dont l'une des branches (35) est en appui sur un contre-palier (37) solidaire du boîtier, et dont l'autre branche (36) actionne dans le sens du verrouillage le bras d'actionnement (30) muni de la tête de verrouillage (26).

5. Machine à café selon la revendication 4, caractérisée en ce que le bras d'actionnement (30) du levier coudé (27) comporte des parties en saillie de sécurité (38, 39), avec lesquelles les branches d'étrier (35, 36) du ressort en étrier (34) sont bloquées en position par recouvrement.
